(19) Europäisches Patentamt
European Patent Office
Office européen des brevets

(11) Veröffentlichungsnummer : **0 150 803**
**B1**

(12) # EUROPÄISCHE PATENTSCHRIFT

(45) Veröffentlichungstag der Patentschrift : **15.06.88**

(51) Int. Cl.⁴ : **C 08 L 27/06**, C 08 K 9/04, C 09 D 3/74, C 09 D 7/12

(21) Anmeldenummer : **85100640.3**

(22) Anmeldetag : **23.01.85**

(54) **Haftungsvermittelnde Zusätze enthaltende PVC-Plastisole für Beschichtungszwecke und ihre Verwendung.**

(30) Priorität : **02.02.84 DE 3403497**

(43) Veröffentlichungstag der Anmeldung : **07.08.85 Patentblatt 85/32**

(45) Bekanntmachung des Hinweises auf die Patenterteilung : **15.06.88 Patentblatt 88/24**

(84) Benannte Vertragsstaaten : **AT BE CH DE FR GB IT LI NL SE**

(56) Entgegenhaltungen :
**EP-A- 0 051 239**
**GB-A- 2 051 846**

(73) Patentinhaber : **BAYER AG**
**Konzernverwaltung RP Patentabteilung**
**D-5090 Leverkusen 1 Bayerwerk (DE)**

(72) Erfinder : **Hurnik, Helmut**
**Dechant-Krey-Strasse 24**
**D-5090 Leverkusen 3 (DE)**
Erfinder : **Grögler, Gerhard, Dr.**
**von Diergardt-Strasse 46**
**D-5090 Leverkusen 1 (DE)**
Erfinder : **Hess, Heinrich, Dr.**
**Koerner-Strasse 5**
**D-5090 Leverkusen 1 (DE)**
Erfinder : **Kopp, Richard, Dr.**
**Wolfskaul 12**
**D-5000 Koeln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft haftungsvermittelnde Zusätze enthaltende PVC-Plastisole für Beschichtungszwecke, auf Basis von

A) PVC-Plastisolen auf Vinylharzbasis und

B) a) Polyisocyanaten

b) Weichmachern und/oder leicht verzweigten, höhermolekularen, PVC-Plastisol-verträglichen Polyhydroxylverbindungen mit Schmelzpunkten unter 60 °C,

dadurch gekennzeichnet, daß die lagerstabilen, jedoch (bei Temperaturen zwischen 100 bis 200 °C) hitzehärtbaren, PVC-Plastisol/Polyisocyanat-Gemische neben Weichmachern und/oder höhermolekularen Polyhydroxylverbindungen als Ba) oberflächenmodifizierte, feinteilige, stabilisierte Polyisocyanate mit retardierter Reaktivität, bei denen 0,1 bis 25 Äquivalent-% der NCO-Gruppen, vorzugsweise durch Reaktion mit Polyaminen, Hydrazin, Alkylhydrazinen, Polyhydrazidverbindungen und/oder mit ausgewählten Amidin- und/oder Guanidinverbindungen, an der Oberfläche umgesetzt sind,

enthalten, wobei das Gewichtsverhältniss von Vinylharz und Weichmacher von 80/20 bis 20/80 variiert.

Weiterhin wird die Verwendung dieser lagerstabilen, jedoch hitzehärtbaren Plastisolgemische, welche als haftvermittelnde Zusätze die oberflächenmodifizierten, stabilisierten Polyisocyanate, Weichmacher und/oder leicht verzweigte, höhermolekulare, PVC-Plastisolverträgliche Polyhydroxylverbindungen, vorzugsweise Polyesterpolyole mit einer Funktionalität ≥ 2,1 und Schmelzpunkten unter 60 °C, enthalten, als Haftgrundstriche bei PVC-Beschichtungen auf Kunststoffen, Folien, textilen Flächengebilden oder Filamenten sowie als Haftgrund für Beflockung beansprucht.

Bei der Beschichtung von organischen Substraten, insbesondere solchen mit gegenüber Isocyanatendgruppen reaktionsfähigen Gruppen, mit PVC-Plastisolen oder mit Schmelzen aus Weich-PVC, entspricht die Haftfestigkeit der Beschichtung oft nicht den Anforderungen der Praxis. Zur Verbesserung der Haftfestigkeit bedient man sich daher sogenannter Haftvermittler (siehe dazu Beschichten mit Kunststoffen, Carl Hanser Verlag München 1967 und Kunststoffe, 68 (1978), S. 735 ff und S. 800 ff).

Die Beschichtung von textilen Flächengebilden, insbesondere solchen auf Basis von Polyamiden (z. B. Nylon 6, Nylon 66 oder Aramiden) oder Polyestern (insbesondere Polyethylenterephthalaten oder Polybutylenterephthalaten) kann jedoch nicht mit PVC-Plastisolen alleine befriedigend vorgenommen werden, da die Haftfestigkeit zu gering ist.

Aus diesem Grunde bringt man zunächst einen Haftstrich auf PVC-Plastisolbasis, welcher Isocyanat-Haftvermittler enthält, auf die textilen Flächengebilde auf. Dieser Haftstrich entwickelt dann gute Bindung zum textilen Substrat und zu den nachfolgend aufgebrachten, reinen PVC-Schichten.

Für diesen Zweck geeignete Haftvermittler sind beispielsweise die in DE-AS 2 419 016 beschriebenen Lösungen von Isocyanato-isocyanuraten in Weichmachern. Ebenfalls gut geeignete Haftvermittler sind in DE-OS 30 41 732 und der EP-A- 51 239 beschrieben, beispielsweise eine Mischung aus Polyisocyanat-Lösung und PVC-Plastisol. Derartige Einkomponenten-Haftvermittler zeigen in der Plastisolmischung Reaktionen der Isocyanate mit Wasserspuren und anderen, in der Plastisolmischung enthaltenen Reaktionskomponenten bzw. katalytisch wirkenden Substanzen, wie z. B. Metallstabilisatoren für PVC.

Neben diesen Einkomponenten-Haftvermittlern (enthaltend nur Polyisocyanate) sind seit Jahren auch Zweikomponenten-Haftvermittler im Einsatz, welche hydroxylgruppenhaltige Polyester und Polyisocyanate in Lösung oder fester Form darstellen (vgl. z. B. DE-PS 957-117, DE-AS 1 719 123).

Der Nachteil all dieser Systeme ist jedoch die begrenzte Lagerstabilität der PVC-Plastisole, welche diese haftungsvermittelnden Polyisocyanat-Zusätze, gegebenenfalls sogar zusammen mit gegenüber Isocyanaten reaktiven Reaktionskomponenten wie Polyhydroxylverbindungen, enthalten.

Durch die genannten Isocyanatreaktionen oder auch mit Luftfeuchtigkeit treten unerwünschte Viskositätssteigerungen ein, welche die Lagerstabilität derartiger Mischungen, auch bei Raumtemperatur, begrenzt.

Es war somit Aufgabe der vorliegenden Erfindung, neue Haftvermittler für PVC-Plastisole zur Verfügung zu stellen, welche die Herstellung von Haftvermittlern auf Basis von Polyisocyanaten enthaltenden PVC-Plastisolen gestatten, die sich durch sehr hohe Lagerstabilität auszeichnen, jedoch bei Hitzehärtung eine ausgezeichnete Haftung ergeben.

Gegenstand der Erfindung sind somit haftungsvermittelnde Zusätze enthaltende PVC-Plastisole für Beschichtungszwecke, auf Basis von

A) PVC-Plastisolen und

B) a) Polyisocyanaten

b) Weichmachern und/oder leicht verzweigten, höhermolekularen, PVC-Plastisol-verträglichen Polyhydroxylverbindungen mit Schmelzpunkten unter 60 °C,

dadurch gekennzeichnet, daß die lagerstabilen, jedoch bei Temperaturen zwischen 100 bis 200 °C hitzehärtbaren PVC-Plastisol/Polyisocyanat-Gemische als Ba) oberflächenmodifizierte, feinteilige, stabilisierte Polyisocyanate mit retardierter Reaktivität, bei denen 0,1 bis 25 Äquivalent-%, insbesondere 0,1 bis 8 Äquivalent-% NCO-Gruppen von festen, feinteiligen Di- und/oder Polyisocyanaten mit Schmelzpunkten über 40 °C, vorzugsweise über 80 °C, mit reaktiven mono- und/oder polyfunktionellen Verbindungen, vorzugsweise mit aliphatischen Polyaminen, Hydrazinen, Alkylhydrazinen, N,N'-Dialkylhydrazinen, Polyhydrazidverbindungen und/oder mit Amidin- und/oder Guanidinverbindungen umgesetzt sind, neben Weichmachern und/oder höhermolekularen Polyhydroxylverbindungen als Bb) enthalten.

Weiterer Erfindungsgegenstand ist die Verwendung dieser lagerstabilen, jedoch hitzehärtbaren Plastisolgemische, welche als haftvermittelnde Zusätze die oberflächenmodifizierten, stabilisierten Polyisocyanate und Weichmacher und/oder leicht verzweigte, höhermolekulare, PVC-Plastisol-verträgliche Polyhydroxylverbindungen, vorzugsweise Polyesterpolyole mit einer Funktionalität ⩾ 2,1 und Schmelzpunkten unter 60 °C, enthalten, für Haftgrundstriche bei PVC-Beschichtungen auf Kunststoffen, Folien, textilen Flächengebilden oder Filamenten sowie als Haftgrund für Beflockung.

A) Als Ausgangsmaterialien für die beanspruchte PVC-Plastisolmischungen werden die üblichen verpastbaren, feinteiligen Vinylharze, vorzugsweise Vinylchloridhomopolymerisate und/oder Vinylchloridcopolymerisate mit z. B. Vinylacetat als Cokomponente eingesetzt, wie sie zur Beschichtung nach dem Stand der Technik üblicherweise verwendet werden (siehe z. B. Kunststoff-Handbuch, Band 2-« Polyvinylchlorid », Carl-Hanser-Verlag, München 1963).

Zur Herstellung der PVC-Plastisole werden die Vinylharze homogen in Weichmachern dispergiert. Bei den Weichmachern für Polyvinylchlorid handelt es sich um die üblichen, für dieses Einsatzgebiet geeigneten Flüssigkeiten, insbesondere um unter Normaldruck einen Siedepunkt von mindestens 250 °C aufweisende bzw. unter Normaldruck nicht destillierbare, bei Raumtemperatur vorzugsweise flüssige Ester auf Basis von

1) Alkansulfonsäuren mit 9 bis 20 Kohlenstoffatomen, Fettsäuren mit 12 bis 18 Kohlenstoffatomen, Alkandicarbonsäuren mit 6 bis 10 Kohlenstoffatomen, aromatischen Di- oder Polycarbonsäuren mit 8 bis 10 Kohlenstoffatomen, wobei bei der Addition der Kohlenstoffatome jeweils die Carboxylgruppen mit einbezogen werden, oder von Phosphorsäure

und

2) einwertigen aliphatischen Alkoholen mit 1 bis 13, vorzugsweise 4 bis 10 Kohlenstoffatomen mit linearer oder verzweigter Kohlenstoffkette, Phenolen mit 6 bis 20, vorzugsweise 6 oder 7 Kohlenstoffatomen und/oder araliphatischen Alkoholen mit 7 bis 20, vorzugsweise 7 bis 8 Kohlenstoffatomen, wie z. B. Di-2-ethylhexyl-phthalat, Di-iso-decylphthalat, Butyl-benzyl-phthalat, 2-Ethylhexyl-benzyl-phthalat, Tri-2-ethylhexyl-phosphat, 2-Ethylhexyl-diphenylphosphat, Iso-decyl-diphenylphosphat, Trikresylphosphat, Kresyl-diphenylphosphat, Tris-(nonylphenyl)-phosphat, Tris-(isopropylphenyl)-phosphat, Di-(2-ethylhexyl)-adipat, Di-isodecyladipat, Di-(2-ethylhexyl)-acelat, Di-(2-ethylhexyl)-sebazat, Tri-(2-ethylhexyl)-trimellithat.

Nähere Einzelheiten über Weichmacher nach dem Stand der Technik sind aufgeführt in Gächter/Müller, Taschenbuch der Kunststoff-Additive, Carl Hanser Verlag, München, Wien, 1983, Seite 261 ff ; ferner in K. Thinius, Chemie, Physik und Technologie der Weichmacher, VEB Deutscher Verlag für Grundstoffindustrie, Leipzig, 1963.

Das Verhältnis von Vinylharz zu Weichmacher richtet sich nach dem jeweiligen Anwendungsgebiet und den Erfordernissen in der Praxis. Es ist im allgemeinen so gewählt, daß man ein Plastisol von streichfähiger und pastöser Konsistenz üblicher Art erhält. Das Gewichtsverhältnis von Vinylharz/Weichmacher kann dabei von 80/20 bis 20/80 variieren, vorzugsweise beträgt es jedoch 70/30 bis 35/65, besonders bevorzugt 65/35 bis 50/50.

Bb) Als leichtverzweigte, höhermolekulare, PVC-Plastisolverträgliche Polyhydroxylverbindungen werden bevorzugt solche mit einer Funktionalität von ⩾ 2 (z. B. ⩾ 2,1) bis 4, und OH-Zahlen von 15 bis 150, bevorzugt mit einer Funktionalität von ⩾ 2,5 und ⩽ 3, bei OH-Zahlen von 20 bis 120 und Schmelzpunkten unterhalb 60 °C, bevorzugt unterhalb 45 °C, eingesetzt.

Bevorzugt sind Hydroxylgruppen-haltige Polyester der genannten Charakteristik, beispielsweise Polyester aus aliphatischen Di- oder Tricarbonsäuren, vorzugsweise solchen mit wenigstens 6 Kohlenstoffatomen in linearer oder verzweigter Kette, z. B. Adipinsäure, Pimelinsäure, Korksäure, Azelainsäure, Sebacinsäure, und/oder 2,2,4-Trimethyladipinsäure sowie auch dimere Fettsäuren, und Diolen, vorzugsweise überwiegend solchen mit mindestens 3 Kohlenstoffatomen, vorzugsweise jedoch gesättigte, unverzweigte oder verzweigte Alkandiole wie Propandiol-1,2, Propandiol-1,3, Butandiol-1,3, Butandiol-1,4, Pentandiol-1,5, 2,2-Dimethylpropandiol-1,3, Hexandiol-1,6, Methylhexandiol-1,6 oder Dimethylpentandiole und Alkan- oder Cycloalkanpolyole mit wenigstens 3 Hydroxylgruppen, wie z. B. Trimethylolpropan-1,1,1, Hexantriol-1,2,6, Glycerin oder andere Triole.

Neben den aliphatischen Di- und Tricarbonsäuren können in untergeordneten Anteilen auch cycloaliphatische Dicarbonsäuren, z. B. Hexahydrophthalsäure, oder aromatische Dicarbonsäuren, z. B. Phthalsäure oder Isophthalsäure, mitverwendet werden.

Zur Polyesterbildung können auch Lactone wie ε-Caprolacton, oder Alkyl-ε-caprolactone, oder Valerolactone herangezogen werden. Weiterhin sind Polycarbonate, insbesondere auf Basis von Hexandiol-1,6 und weiteren Cokomponenten auf Di- oder Triolbasis Beispiele für einsetzbare Polyester.

Neben diesen Polyestern können gegebenenfalls untergeordnete Mengen an anderen, an sich bekannten höhermolekularen Polyhydroxylverbindungen mitverwendet werden, soweit sie in dem Plastisol verträglich oder mischbar sind, z. B. Polyoxytetramethylen-diole.

Als erfindungsgemäß einzusetzende, stabilisierte, feste Polyisocyanate Ba) mit einer retardierten Reaktivität werden erfindungsgemäß nun solche festen und feinteiligen Polyisocyanate eingesetzt, die

durch Reaktion von feinteiligen Polyisocyanaten mit den oberflächenmodifizierenden « Stabilisatoren » wie (aliphatischen) Polyaminen, Hydrazin, Alkylhydrazinen, N,N'-Dialkylhydrazinen, Hydrazidverbindungen mit 2 oder mehr CO-NH-$NH_2$-Endgruppen, sowie ausgewählten Amidinen oder Guanidinen eine Umhüllung mit Polyadditionsprodukten unter Umsetzung von etwa 0,1 bis 25 %, vorzugsweise 0,1 bis 8 %, insbesondere 0,2 bis 5 %, der vorhandenen NCO-Gruppen und unter Desaktivierung der Polyisocyanate ergeben.

Die Umhüllung wird im wesentlichen aus Polyadditionsprodukten in dünner Schicht und in nur untergeordneter Abreaktion der NCO-Gruppen an der Oberfläche der festen Polyisocyanatteilchen gebildet. Durch die Stabilisierungsreaktion mittels Polyadduktumhüllung werden Polyisocyanatteilchen erhalten, welche in den erfindungsgemäßen PVC/Haftstrich-Kombinationen, auch in Gegenwart der OH-Endgruppen aufweisenden Polyhydroxylverbindungen, Metallkatalysatoren oder Luftfeuchtigkeit, lagerstabil sind und erst oberhalb einer bestimmten Temperatur oder durch Auflösung der Polyadduktschicht durch polare Lösungsmittel als Polyisocyanate in Reaktion treten und dann die erwünschte, erhöhte Haftung zum Substrat ergeben.

Die « Polyaddukt »-Hülle auf den festen Polyisocyanatteilchen ist je nach Art der « Stabilisatoren » etwas unterschiedlich. Mit Polyaminen bilden sich Polyharnstoff-Umhüllungen, mit Hydrazin(en) bilden sich Polyhydrazodicarbonamid-Umhüllungen, mit Polyhydrazidverbindungen mit CO-NH-$NH_2$-Endgruppen, wie Dihydraziden, Bis-semicarbaziden, Bis-carbazinestern, Semicarbazidhydraziden oder Aminohydraziden, bilden sich noch komplexere Polyaddukte mit einer Vielzahl von unterschiedlich angeordneten —NH— und —CO-Gruppen in der Polymerkette.

Zur Stabilisierung der festen Polyisocyanate eignen sich auch Amidine bzw. Guanidine, welche keine bei Raumtemperatur reaktiven Wasserstoffatome tragen. Diese Stabilisierungsreaktion ist besonders überraschend und ergibt auch besonders günstige Eigenschaften, da das Additionsprodukt bei höheren Temperaturen zerfällt und dann nicht die Isocyanatreaktionen desaktiviert, sondern in der homogenen Phase überaus stark katalysiert.

Als Ausgangskomponenten für die erfindungsgemäß stabilisierten, festen Polyisocyanate sind alle Di- oder Polyisocyanate oder deren beliebige Gemische geeignet, sofern sie einen Schmelzpunkt oberhalb 40 °C, vorzugsweise oberhalb 80 °C, besonders bevorzugt oberhalb 100 °C, aufweisen.

Es können dies aliphatische, cycloaliphatische, araliphatische, bevorzugt aber aromatische und heterocyclische Polyisocyanate sein, ferner Polyphenyl-polymethylenpolyisocyanate, erhalten durch Anilin-Formaldehyd-Kondensation und anschließende Phosgenierung nach den britischen Patentschriften 874 430 und 848 671, weiterhin perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethan- oder Harnstoffgruppen aufweisende Polyisocyanate, acylierte Harnstoffgruppen aufweisende Polyisocyanate, Biuretgruppen aufweisende Polyisocyanate, durch Telomerisationsreaktion hergestellte Polyisocyanate, Estergruppen aufweisende Polyisocyanate, ferner bevorzugt Uretdiongruppen aufweisende Diisocyanate und Harnstoffgruppen aufweisende Diisocyanate. Als Beispiele für die einsetzbaren Polyisocyanate seien genannt :

| | |
|---|---|
| 1,5-Diisocyanatomethylnaphthalin | Fp. : 88-89 °C |
| 1,4-Phenylendiisocyanat | 94-96 °C |
| 1,3-Dimethylvenzol-4,6-diisocyanat | 70-71 °C |
| 1,4-Dimethylbenzol-2,5-diisocyanat | 76 °C |
| 1,4 Dichlorbenzol-2,5-diisocyanat | 134-137 °C |
| 1-Methoxybenzol-2,4-diisocyanat | 75 °C |
| 1-Methoxybenzol-2,5-diisocyanat | 89 °C |
| 1,3-Dimethoxybenzol-4,6-diisocyanat | 125 °C |
| Azobenzol-4,4'-diisocyanat | 158-161 °C |
| Diphenylether-4,4'-diisocyanat | 66-68 °C |
| Diphenyl-dimethylmethan-4,4'-diisocyanat | 92 °C |
| Naphthalin-1,5-diisocyanat | 127-130 °C |
| 3,3'-Dimethylbiphenyl-4,4'-diisocyanat | 68-69 °C |
| Diphenylsulfon-4,4'-diisocyanat | 154 °C |
| 4,4'-Diisocyanato-(1,2)-diphenyl-ethan | 88-90 °C |
| dimeres 1-Methyl-2,4-phenylendiisocyanat | 156 °C |
| dimeres 1-Isopropyl-2,4-phenylendiisocyanat | 125 °C |
| dimeres 1-Chlor-2,4-phenylendiisocyanat | 177 °C |
| dimeres 2,4'-Diisocyanato-diphenylsulfid | 178-180 °C |
| dimeres Diphenylmethan-4,4'-diisocyanat | |
| 3,3'-Diisocyanato-4,4'-(oder -2,2')-dimethyl-N,N'-diphenylharnstoff | |
| N,N'-Bis [4(4-Isocyanatophenylmethyl) phenyl] harnstoff | |
| N,N'-Bis [4(2-Isocyanatophenylmethyl) phenyl] harnstoff | |
| trimeres 2,4-Diisocyanatotoluol (isocyanurat-isocyanat) | |
| trimeres 4,4'-Diisocyanatodiphenylmethan (isocyanuratisocyanat) | |
| trimeres Isophorondiisocyanat (isocyanurat-isocyanat) | |

oder das Addukt von 3 Mol 2,4-Diisocyanatotoluol mit 1 Mol Trimethylolpropan.

Ferner sind Mischtrimerisate auf Basis von z. B. TDI/MDI, TDI/HDI oder Produkte entsprechend DE-OS 3 041 732 geeignet.

Erfindungsgemäß werden bevorzugt 3,3'-Diisocyanato-4,4'-(oder 2,2'-)-dimethyl-N,N'-diphenylharnstoff, dimeres 2,4-Diisocyanatotoluol, dimeres 4,4'-Diisocyanatodiphenylmethan und 3,3'-Dimethyl-4,4'-diisocyanatodiphenylmethan, sowie die Isocyanurate (Trimere) auf Basis von 2,4-Diisocyanatotoluol, 4,4'-Diisocyanatodiphenylmethan und Isophorondiisocyanat eingesetzt. Die dimeren und trimeren Diisocyanate können auch durch in situ-Dimerisierung oder Trimerisierung in z. B. Weichmachern, Lösungsmitteln oder Polyolen feinverteilt hergestellt und gegebenenfalls in dieser Form der Stabilisierungsreaktion unterworfen werden.

Zur Stabilisierung der genannten Polyisocyanate können bevorzugt folgende Verbindungsklassen eingesetzt werden :

1. aliphatische (cycloaliphatische) Di- und Polyamine,
2. Hydrazin, Alkylhydrazine, N,N'-Dialkylhydrazine bzw. Di- bzw. Polyhydrazidverbindungen,
3. offenkettige, mono- oder bicyclische Amidine bzw. Guanidine der genannten Struktur.

Als « Amin-Stabilisatoren » werden zwei- oder mehrfunktionelle nieder- oder höhermolekulare Verbindungen mit aliphatisch gebundenen, primären und/oder sekundären Aminogruppen und einem Molekulargewicht von 60 bis etwa 6000, vorzugsweise 60 bis 3000, eingesetzt. Es sind dies niedermolekulare und/oder höhermolekulare primäre und/oder sekundäre Polyamine, vorzugsweise Diamine. Die Aminogruppen sind dabei an aliphatische Reste (einschließlich cycloaliphatische, oder an den aliphatischen Rest von araliphatischen Gruppen) gebunden. Die aliphatischen bzw. cycloaliphatischen Di- und Polyamine können gegebenenfalls neben den Aminogruppen auch noch OH-Gruppen, tertiäre Aminogruppen, Ethergruppen, Thioethergruppen, Urethangruppen, Harnstoffgruppen, Carboxylgruppen oder Carbonsäurealkylestergruppen aufweisen.

Als Stabilisatoren einsetzbare Di- und Polyamine sind z. B. Ethylendiamin, 1,2- und 1,3-Propandiamin, 1,4-Butandiamin, 1,6-Hexandiamin, Neopentandiamin, 2,2,4- und 2,4,4-Trimethyl-1,6-diaminohexan, 2,5-Dimethyl-2,5-diaminohexan, 1,10-Decandiamin, 1,11-Undecandiamin, 1,12-Dodecandiamin, Bis-aminomethyl-hexahydro-4,7-methanoindan (TCD-Diamin), 1,3-Cyclohexandiamin, 1,4-Cyclohexandiamin, 1-Amino-3,3,5-trimethyl-5-aminomethyl-cyclohexan (Isophorondiamin), 2,4- und/oder 2,6-Hexahydrotoluylendiamin, 2,4'- und/oder 4,4'-Diaminodicyclohexylmethan, m- oder p-Xylylendiamin, Bis-(3-aminopropyl)-methylamin, Bis-N,N'-(3-aminopropyl)-piperazin und 1-Amino-2-aminomethyl-3,3,5-(3,5,5)-trimethylcyclopentan, 2,2-Dialkylpentan-1,5-diamine oder Triamine wie 1,5,11-Triaminoundecan, 4-Aminomethyl-1,8-diaminooctan, Lysinmethylester, cycloaliphatische Triamine gemäß DE-OS 2 614 244, 4,7-Dioxadecan-1,10-diamin, 2,4- und 2,6-Diamino-3,5-diethyl-1-methylcyclohexan und deren Gemische, alkylierte Diaminodicyclohexylmethane, z. B. 3,3'-Dimethyl-5,5'-diamino-dicyclohexylmethan oder 3,5-Diisopropyl-3',5'-diethyl-4,4'-diaminodicyclohexylmethan, perhydrierte Diaminonaphthaline, perhydrierte Diaminoanthrazene, oder höherwertige Amine wie Diethylentriamin, Triethylentetramin, Pentaethylenhexamin, Dipropylentriamin, Tripropylentetramin, oder N,N'-Dimethyl-ethylendiamin, 2,5-Dimethylpiperazin, 2-Methylpiperazin, Piperazin-(hydrat) und 2-Hydroxyethylpiperazin.

Außer diesen niedermolekularen aliphatischen Diaminen oder im Gemisch hiermit können auch höhermolekulare aliphatische Di- und Polyamine verwendet werden, wie sie z. B. durch reduktive Aminierung von Polyoxyalkylenglykolen mit Ammoniak nach BE-PS 634 741 oder US-PS 3 654 370 erhalten werden können. Weitere höhermolekulare Polyoxyalkylen-Polyamine können nach Methoden, wie sie in der Firmenschrift « Jeffamine, Polyoxypropylene Amines » von Texaco Chemical Co., 1978, aufgezählt werden, hergestellt werden, beispielsweise durch Hydrierung von cyanethylierten Polyoxypropylenglykolen (DE-OS 1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-A 2 546 536. Geeignete höhermolekulare aliphatische Di- und Polyamine sind auch die nach DE-OS 29 48 419 und DE-OS 3 039 600 durch alkalische Hydrolyse von NCO-Prepolymeren (mit aliphatischen Diisocyanaten) mit Basen über die Carbamatstufe zugänglichen Polyamine. Diese höhermolekularen Polyamine besitzen Molekulargewichte von etwa 400 bis 6000, vorzugsweise 400 bis 3000 und besonders bevorzugt von 1000 bis 3000. Infolge ihres Aufbaus sind derartige höhermolekulare Polyamine zur Ausbildung einer nichtbrüchigen, « elastischen » Polyharnstoffumhüllung besonders geeignet. Sie werden daher, vorzugsweise in Mischung mit den niedermolekularen Di- und Polyaminoverbindungen, zur Aminstabilisierung der Polyisocyanatteilchen eingesetzt. Im Falle der Verwendung dieser höhermolekularen Aminoverbindungen kann bei der Stabilisierungsreaktion ein Zusatz von Polyolen (zur « Elastifizierung » der Umhüllungshaut der Isocyanatteilchen) unterbleiben.

Als « Stabilisatoren » für die genannten Polyisocyanate werden aber auch Hydrazin, Alkylhydrazine sowie N,N'-Dialkylhydrazine, vorzugsweise mit $C_1$-$C_6$-Alkylgruppen, die auch als weitere Substituenten Chlor- oder OH-Gruppen tragen können (mit Molekulargewichten von vorzugsweise 32 bis 198) und/oder zwei- oder mehrfunktionelle, nieder- oder höhermolekulare Verbindungen mit $—CO \cdot NH \cdot NH_2$-Endgruppen, und einem Molekulargewicht von 90 bis etwa 6000, vorzugsweise 90 bis 3000, eingesetzt. Es sind

dies z. B. Hydrazin, zumeist in Form von Hydrazinhydrat, alkylsubstituierte Hydrazine, z. B. Methylhydrazin, Ethylhydrazin, Hydroxyethyl-hydrazin oder N,N'-Dimethylhydrazin. Weiter geeignete « Stabilisatoren » sind Verbindungen mit Hydrazid-Endgruppen, z. B. Di- oder Polyhydrazide wie Carbodihydrazid, Hydracrylsäurehydrazid, Oxalsäuredihydrazid, Adipinsäuredihydrazid, Terephthalsäuredihydrazid, Isophthalsäurehydrazid oder Verbindungen mit Hydrazid- und Semicarbazid-, Carbazinester- oder Amino-Gruppen, z. B. β-Semicarbazidopropionsäurehydrazid, 2-Semicarbazidoethylencarbazinester, Aminoessigsäurehydrazid, β-Aminopropionsäurehydrazid oder Biscarbazinester oder Bissemicarbazide wie Ethylen-bis-carbazinester bzw. Ethylen-bis-semicarbazid oder Isophoron-bis-semicarbazid. Bevorzugt sind Hydrazin und niedermolekulare Verbindungen mit —CO—NH—$NH_2$-Gruppen mit Molekulargewichten von 32 bis 399. Besonders bevorzugt ist Hydrazinhydrat und β-Semicarbazido-propionsäurehydrazid sowie Alkylenbissemicarbazide.

Als Stabilisatoren können weiterhin besonders günstig auch offenkettige, monocyclische oder bicyclische Verbindungen, welche die Amidin- und/oder die Guanidingruppierung

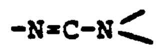

(I)

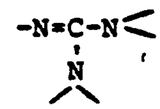

(II)

ein- oder mehrmals enthalten und welche keine gegenüber Isocyanaten bei Raumtemperatur reaktiven H-Atome besitzen, verwendet werden.

Die offenkettigen, mono- oder bicyclischen Amidin- bzw. Guanidin-Verbindungen werden in der vorliegenden Anmeldung auch kurz als « Amidin-Verbindungen », bzw. « Verbindungen mit Amidin-Resten » oder ganz kurz als « Amidin »-Stabilisatoren bezeichnet.

Bei den einzusetzenden Amidinen handelt es sich um offenkettige oder cyclische Amidine, vorzugsweise solche entsprechend den Formeln (III) bis (VII) :

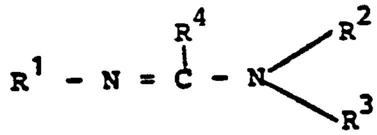

(III)

wobei

$R^1$ H, einen geradkettigen oder verzweigten aliphatischen Kohlenwasserstoffrest mit 1 bis 18 C-Atomen, vorzugsweise 1 bis 4 C-Atomen, einen cycloaliphatischen Kohlenwasserstoff mit 5 bis 7 Ring-C-Atomen, einen araliphatischen Rest oder einen aromatischen Rest, vorzugsweise mit 6-10 C-Atomen in dem aromatischen Teil und gegebenenfalls 1-6 C-Atomen im aliphatischen (oder cycloaliphatischen) Teil, welche Reste gegebenenfalls inerte Substituenten aufweisen und/oder durch Struktureinheiten —O—, —S— oder —N-Alkyl, vorzugsweise —$C_1$-$C_6$-Alkyl, bzw. —N-Cycloalkyl, vorzugsweise $C_5$-$C_7$-Cycloalkyl, unterbrochen sind,

$R^2$ und $R^3$ gleiche oder verschiedene Reste wie $R^1$, oder Alkylen-N-(di-(cyclo)-alkyl)-Reste, vorzugsweise —$(CH_2)_n$-N-($C_1$ bis $C_6$-Alkyl$)_2$-Reste, mit n = 2-12, jedoch nicht H, und

$R^4$ Reste wie $R^1$

bedeuten, und wobei die Amidine besonders bevorzugt mono- oder bicyclische Amidine darstellen, in denen jeweils zwei der Reste $R^1$ bis $R^4$ untereinander cyclisch verknüpft sein können, und wo gegebenenfalls mehrere Amidinreste über mehrwertige Reste verbunden sind.

Solche cyclischen Amidine entsprechen dabei vorzugsweise den Formeln (IV) bis (VII), wobei entsprechend der Formel (IV)

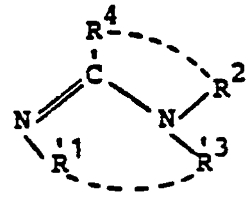

(IV)

die Reste $R^1$ und $R^3$ zusammen und/oder die Reste $R^2$ und $R^4$ zusammen einen, gegebenenfalls Heteroatom(gruppen) wie —O—, —S— oder —N-Alkyl-Gruppen, vorzugsweise —$C_1$-$C_6$-Alkyl-, enthaltenden, gegebenenfalls verzweigten Alkylenrest mit 2 bis 5 C-Atomen in der Alkylenkette, vorzugsweise den —$(CH_2)_2$— oder —$(CH_2)_3$-Rest darstellen ;

oder entsprechend der Formel (V)

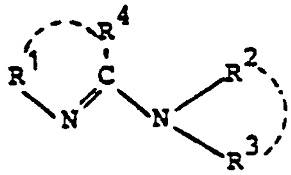

(V)

die Reste $R^1$ und $R^4$ zusammen und/oder die Reste $R^2$ und $R^3$ zusammen einen, gegebenenfalls Heteroatome, z. B. —O—, enthaltenden, gegebenenfalls verzweigten Alkylenrest mit 2 bis 5 C-Atomen in der Alkylenkette, vorzugsweise $-(CH_2)_2-$ und $-(CH_2)_3-$ darstellen ; oder es sind cyclische Amidine der Formel (VI), welche den Amidinrest mehrfach enthalten

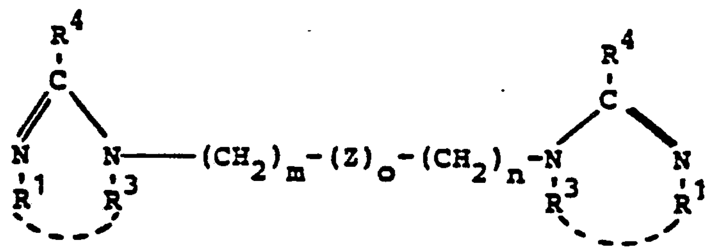

(VI)

wobei

Z eine $>$N-Alkylgruppe, vorzugsweise eine $>$N-$C_1$-$C_4$-Alkylgruppe, oder einen geradkettigen oder verzweigten $C_2$ bis $C_{14}$-Alkylenrest, der gegebenenfalls in der Kette durch —O— unterbrochen sein kann, einen Cycloalkanrest mit 5 bis 8 Ringgliedern oder einen Dicyclohexyl-($C_1$- bis $C_4$-alkan)-Rest, darstellt und

m und n gleiche oder verschiedene ganze Zahlen von 2 bis 10, vorzugsweise 2 oder 3 sind, und
o Null oder 1

bedeutet ; besonders bevorzugte Amidine sind auch solche der Formel (VII)

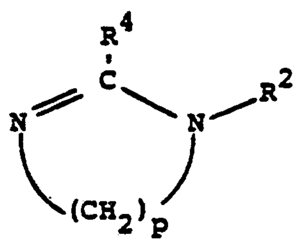

(VII)

wobei

p = 2, 3 oder 4

$R^4$ = geradkettiges oder verzweigtes $C_1$-$C_4$-Alkyl (z. B. Methyl, Ethyl, Isopropyl oder tert.-Butyl),

$R^2$ = geradkettiges oder verzweigtes $C_1$-$C_4$-Alkyl, $-(CH_2)_p \cdot N \cdot (R^4)_2$ oder $C_5$-$C_7$-Cycloalkyl ist.

Beispiele für offenkettige Amidine (III) sind : N,N-Dimethylformamidin, N,N-Dimethylacetamidin, N,N-Diethyl-formamidin, N,N,N'-Trimethylacetamidin, N,N-Dimethyl-N'-benzyl-acetamidin, N,N-Dicyclohexyl-N'-methyl-acetamidin, N,N-Dimethyl-N'-cyclohexyl-formamidin, N,N-Dimethyl-N'-tert.-butyl-formamidin.

Beispiele für die besonders bevorzugten monocyclischen Amidine (IV) sind :

1,2-Dimethyl-Δ2-imidazolin,1-Methyl-2-phenyl-Δ2-imidazolin,1(N)-Methyl-Δ2-imidazolin,2-Benzylimino-N-methyl-caprolactam, 2-Butylimino-N-methyl-butyrolactam, 1,8-Diaza-bicyclo [5,3,0]-dec-7-en, 1,8-Diaza-bicyclo [5,4,0]-undec-7-en, 1,7-Diaza-bicyclo [4,4,0]-dec-6-en, 1,6-Diaza-bicyclo [3,4,0]-non-5-en, 1,5-Diaza-bicyclo [4,3,0]-non-5-en, 1,14-Diaza-bicyclo [11,4,0]-heptadec-13-en, 1-(N)-Methyl-Δ2-tetrahydropyrimidin, 1-Cyclohexyl-2-methyl-Δ2-tetrahydropyrimidin, 1-Cyclohexyl-Δ2-tetrahydropyrimidin, 1-Benzyl-2-butyl-Δ2-tetrahydropyrimidin, 1-Methyl-2-methyl-Δ2-tetrahydropyrimidin, 1-Butyl-2-methyl-Δ2-tetrahydropyrimidin, 1-(2-Ethylhexyl)-2-methyl-Δ2-tetrahydropyrimidin, 1-Dodecyl-2-methyl-Δ2-tetrahydropyrimidin, 1-(1-Methylcyclohexyl)-2-methyl-Δ2-tetrahydropyrimidin, 1-(2-Methylhexyl)-2-methyl-Δ2-tetrahydropyrimidin, 1-(3,3,5-Trimethylcyclohexyl)-2-methyl-Δ2-tetrahydropyrimidin.

Derartige Verbindungen lassen sich insbesondere entsprechend den Angaben in der DE-A 2 439 550 synthetisieren.

Ganz besonders bevorzugte Amidine sind solche vom Typ (IVa)

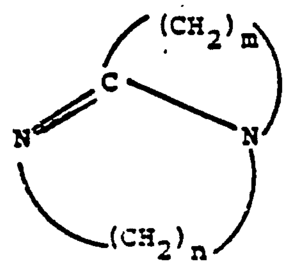

(IVa)

wobei

m 2, 3, 4, 5 oder 11 und

n 2, 3 oder 4 bedeutet.

Die Herstellung einer Anzahl solcher Verbindungen ist beispielsweise in der DE-PS 1 545 855 beschrieben.

Verbindungen vom Typ IV mit einer Dialkylaminoalkyl-Seitengruppe $R^2$ sind beispielsweise :

1-(3-N,N-Dimethylamino-propyl)-2-methyl-Δ2-tetrahydropyrimidin,

1-(2-N,N-Dimethylaminoethyl)-2-methyl-Δ2-tetrahydropyrimidin,

und werden entsprechend den Angaben der DE-A 30 49 131 hergestellt.

Beispiele für die Amidine der Formel (V) sind

1-Methyl-4-(2-tetrahydroazepinyl)-piperazin

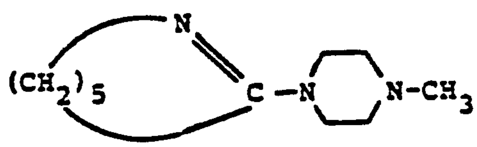

Phenyl-methyl-(2-tetrahydroazepinyl)-amin

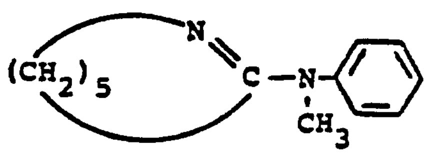

Benzyl-methyl-(2-tetrahydroazepinyl)-amin

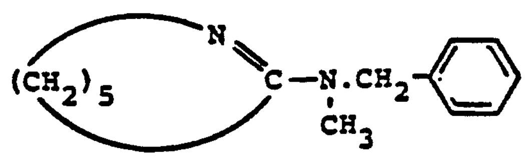

4-(2-Tetrahydroazepinyl)-morpholin

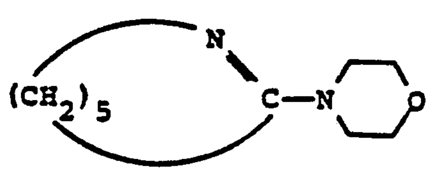

Die offenkettigen, bzw. durch Verknüpfung jeweils zweier Reste entstandenen cyclischen oder bicyclischen Amidine werden in der DE-A 2 722 514 beschrieben.

Allgemeine Hinweise zur Synthese von Amidinen finden sind in Houben-Weyl, Methoden der Organischen Chemie, Band XI, 2, Seiten 38 bis 66 ; Verlag G. Thieme, Stuttgart 1958.

Verbindungen vom Typ der Formel (VI) sind beispielsweise

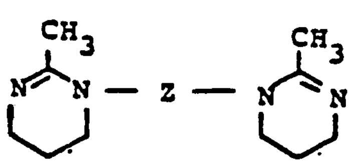

wobei vorzugsweise

Z =

$-(CH_2)_2-$

$-(CH_2)_6-$

$-(CH_2)_3\cdot \underset{\displaystyle CH_3}{\underset{|}{N}}(CH_2)_3-$

$-(CH_2)_6\cdot NH\cdot CO\cdot O\cdot (CH_2)_3\cdot O\cdot (CH_2)_3\cdot O\cdot CO-NH(CH_2)_6-$

oder

$-(CH_2)_2-O-(CH_2)_2-$ ist.

Diese Verbindungen werden nach den in der DE-A 30 49 131 angegebenen Methoden erhalten.

Bei den Guanidinen, vorzugsweise entsprechend der Formel (VIII) handelt es sich um offenkettige oder cyclische Guanidine oder Di- bzw. Tri-Guanidine, sowie Verbindungen welche den Guanidinrest auch mehrfach tragen können :

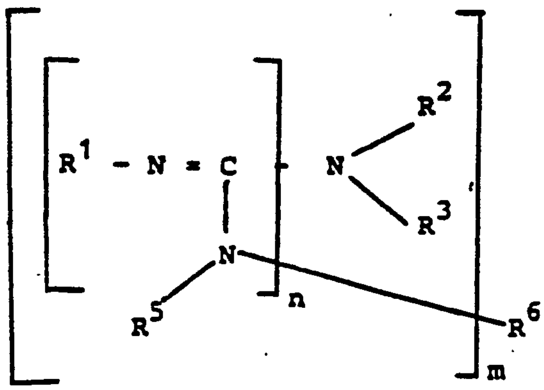

(VIII)

In der Formel (VIII) bedeuten dabei :

m = 1 oder 2,

n = 1, 2 oder 3, vorzugsweise n = 1 (im Falle vom m = 1) und 1 (im Falle von m = 2) ;

$R^1$, $R^2$, $R^3$ steht für Reste, wie sie bereits für die Amidine in der Formel (III) beschrieben sind ;

$R^5$ hat eine Bedeutung wie $R^2$,

$R^6$ steht entweder für einen einwertigen Rest der für $R^2$ genannten Art oder für einen zweiwertigen Alkylenrest, der gegebenenfalls durch —O—, —N(Alkyl)-, vorzugsweise $C_1$-$C_6$-Alkyl-, oder —N(Cycloalkyl)-, vorzugsweise $C_5$-$C_7$-(Cycloalkyl)-Reste unterbrochen sein kann, wobei im Falle von n = 1 jeweils zwei der Reste $R^1$, $R^2$, $R^3$, $R^5$ und $R^6$ miteinander auch cyclisch verknüpft sein können, so daß auch cyclische Guanidine der nachfolgenden Strukturen entstehen :

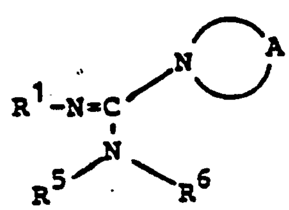

(VIIIa)

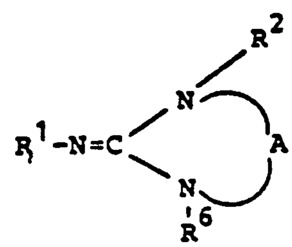

(VIIIb)

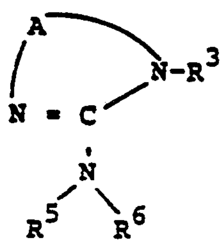

(VIIIc)

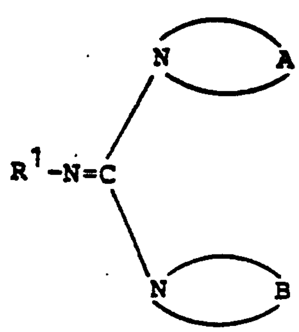

(VIIId)

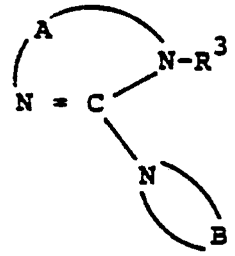

(VIIIe)

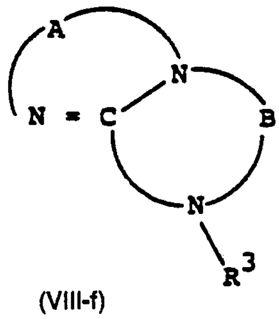

(VIII-f)

In den Formeln (VIIIa bis VIIIf) bedeuten die durch Verknüpfung jeweils zweier Substituenten entstandenen Gruppierungen A und B mindestens zweigliedrige, vorzugsweise 2 bis 5 Kettenglieder enthaltende, bivalente, aliphatische, cycloaliphatische, araliphatische oder aromatische Kohlenstoffketten, die gegebenenfalls auch durch Heteroatome (—O—, —S—, —N(Alkyl)-) unterbrochen oder mit gegenüber Isocyanaten inerten Substituenten (z. B. Halogen, Alkyl) substituiert sein können.

Weitere geeignete Guanidine sind in der folgenden Zusammenstellung wiedergegeben.

(Siehe Formeln Seite 11 f.)

| Substituenten am Stickstoff | x-fach substituiert, | in folgenden Guanidin-Grundgerüsten |
|---|---|---|
| Methyl-, Ethyl-, (Iso)propyl-, (Iso)butyl-, (tert.)-Butyl-, (Iso)pentyl-, Hexyl-, 2-Ethylhexyl-, Octyl-, Dodecyl-, Stearyl-, Ethoxypropyl-, Butoxyhexyl-, Cyanoethyl-, Cyanohexyl-, Butoxycarbonyl-methyl-, Methoxycarbonylmethyl-, Dimethylaminopropyl-, Cyclopentyl-, Cyclohexyl-, (Chlor)Benzyl-, Phenethyl-, Phenyl-, Tolyl-, Methoxyphenyl-, Ethoxycarbonylphenyl-, | tetra- | 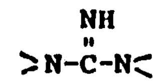 |
| | penta- | 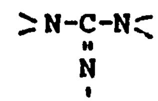 |
| | tri- | 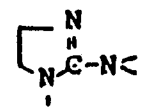 |
| | tri- | 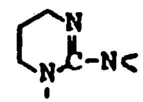 |
| | tri- | 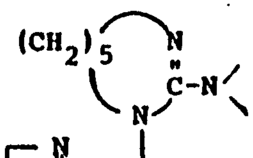 |
| | mono- | 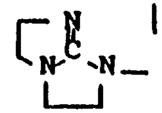 |
| | mono- | 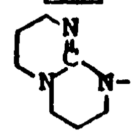 |
| | mono- | 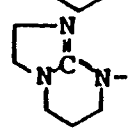 |

Weitere Beispiele sind Iminokohlensäure-bis-(sek.)-amide folgender Zusammensetzung

| | | |
|---|---|---|
| Methylimino-,<br>Ethylimino-,<br>Cyanethylimino-,<br>Dibutylaminobutylimino-<br>Hexylimino-<br>Stearylimino-<br>Cyclohexylimino-<br>Benzylimino-<br>Phenylimino-<br>p-Chlorbenzylimino-<br>4-Methyl-benzylimino- | Kohlensäure | -bis-morpholid<br>-bis-piperidid<br>-bis-N'-Methyl-piperazid |

Besonders geeignete cyclische Guanidinverbindungen werden in den folgenden Formeln wiedergegeben :

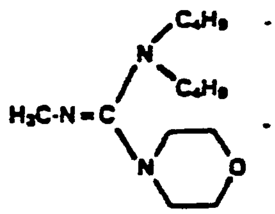

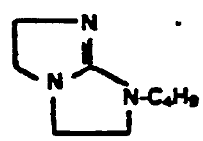

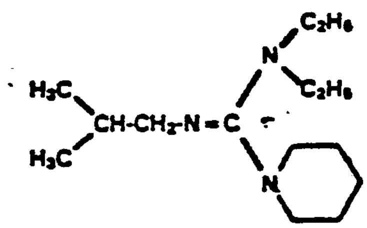

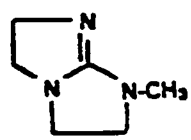

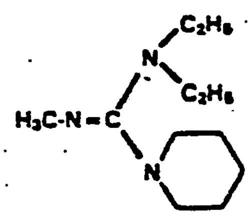

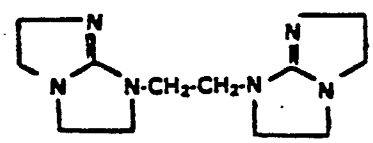

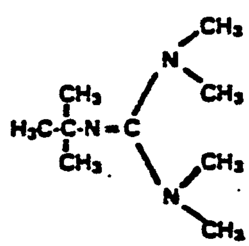

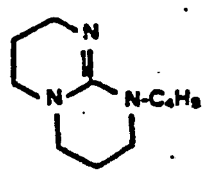

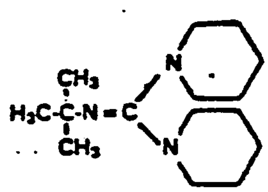

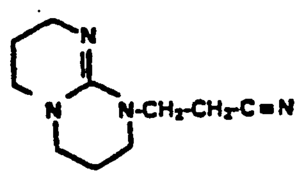

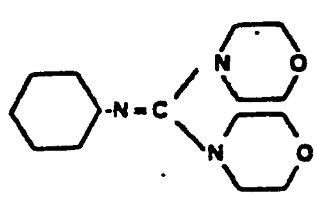

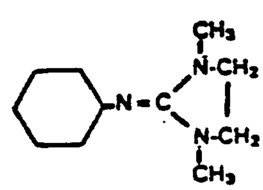

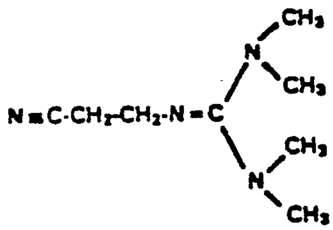

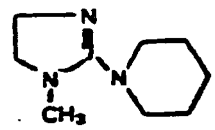

Technisch besonders bevorzugt sind Tetramethylguanidin, Pentamethylguanidin, sowie folgende cyclische Guanidinverbindungen

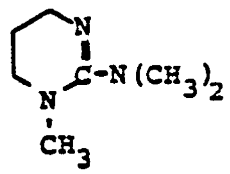

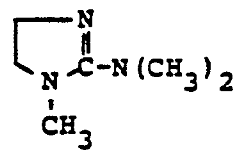

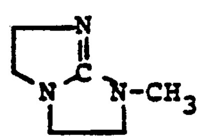

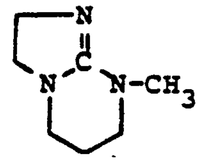

Anstelle der freien « Amidinverbindungen » können auch Säureadditionssalze der Amidine bzw. Guanidine eingesetzt werden, jedoch sind diese Salze weniger bevorzugt.

Der Ausdruck « Säureadditionssalze » soll Salze, welche mit Säuren gebildet sind, ebenso einschließen, wie Salze, welche mit anderen Protonendonator-Verbindungen gebildet sind. Typische Säuren zur Herstellung dieser Salze sind Monocarbonsäuren, wie Ameisensäure, Essigsäure, Propionsäure, Buttersäure, Capronsäure, Valeriansäure, Octylsäure, Laurinsäure, Stearinsäure, Ölsäure ; Dicarbonsäuren, wie Oxalsäure, Malonsäure, Bernsteinsäure, Fumarsäure, Adipinsäure ; Hydroxylsäuren, wie Glykolsäure, Milchsäure, Weinsäure und dergleichen ; Sulfonsäuren, wie Alkyl- oder Aryl-Sulfonsäuren, Sulfaminsäure, Sulfanilsäure ; anorganische Säuren, wie Kohlensäure, Phosphorsäure, Salzsäure, Schwefelsäure und dergleichen und andere Protonendonator-Verbindungen, wie Sulfonamide ; Phenole, wie Phenol, Kresol oder Thiophenole ; Enole, wie Barbitursäure, Harnsäure und dergleichen. Besonders bevorzugt sind Fettsäuren mit wenigstens zwei Kohlenstoffatomen und Phenole.

Bei Verwendung von offenkettigen, mono- oder bicyclischen Amidinen bzw. Guanidinen zur Desaktivierung der festen Polyisocyanate ist eine zum Teil beachtliche Steigerung des Oberflächenstabilisierungseffektes der Polyisocyanate dann zu beobachten, wenn geringe Mengen an Wasser, niedermolekularen Glykolen oder Aminen dem Reaktionsgemisch zugefügt werden.

Ein erfindungsgemäßes Merkmal bei der erfindungsgemäßen Oberflächenmodifizierung von festen Polyisocyanaten ist es, daß die zur Desaktivierung verwendeten Amidine bzw. Guanidine einerseits bei Raumtemperatur eine beachtliche Stabilisierung der Isocyanate, sogar gegenüber aromatisch oder aliphatisch gebundenen $NH_2$-Gruppen (z. B. in höhermolekularen aliphatischen Polyaminen) bewirken, bei der Hitzevernetzung (Gelierungsreaktion der PVC-Plastisole unter gleichzeitiger Vernetzung der Polyisocyanate) dann jedoch voll ihre katalytische Wirksamkeit oberhalb der Aufdickungstemperatur entfalten. So kann im allgemeinen auf Zusätze von weiteren Katalysatoren verzichtet werden, wie sie für eine rasche Verfestigung von träge reaktiven H-aktiven Verbindungen (z. B. mit sekundären OH-Endgruppen oder auch mit Wasser) benötigt würden.

Die Verwendung von Amidinen und Guanidinen kann insbesondere dann von Vorteil sein, wenn neben der genannten Stabilisierung der Polyisocyanate die in der Hitze ablaufende NCO-Reaktion mit den H-aktiven Gruppierungen des Substrates katalysiert werden soll. Darüber hinaus können Amidine bzw. Guanidine in der Hitze weitere NCO-Folgereaktionen, wie z. B. die Uretdionringspaltung bei dimeren Polyisocyanaten, Trimerisierung, Allophanatisierung oder Biuretisierung bei den genannten Polyisocyanaten einleiten. Diese Folgereaktionen können bei geeigneten Substraten zu einer beachtlichen Verbesserung der Haftwirkung führen.

Selbstverständlich können beliebige Kombinationen der genannten « Stabilisatoren » verwendet werden, um z. B. nachteilige Nebeneffekte eines Amins oder Amidins durch entsprechende Vorteile anderer Amine oder Amidine auszugleichen (z. B. nieder- und höhermolekulare Diamine in gemeinsamer Anwendung) oder um möglichst viele vorteilhafte Nebeneffekte zu vereinigen. In Frage kommen z. B. Kombinationen von schnell reagierenden Aminen wie z. B. Ethylendiamin mit durch sterische Hinderung verlangsamten Aminen oder von niedermolekularen Aminen mit hochmolekularen Aminen wie z. B. aliphatischen Aminopolyethern, oder von Polyaminen mit Hydrazinen oder Hydrazid-Derivaten. Vorzugsweise verwendet man neben Hydrazin- oder Hydrazid-Derivaten oder Amidinen bzw. Guanidinen

höchstens bis 50 Mol-% an Polyaminen, bezogen auf die Gesamtmenge der eingesetzten « Stabilisatoren ».

Auch die Kombination von Amin und Amidinen ist dann vorteilhaft, wenn einerseits der Stabilisierungseffekt (Einfluß auf die Verarbeitungstemperatur und -Zeit) und andererseits die durch Amidine verursachten NCO-Folgereaktionen (Einfluß auf Substrathaftung) abgeglichen werden sollen.

Die « Amin-Stabilisatoren » werden in einer Menge von 0,1 bis 25 Äquivalent-% $NH_2$ pro Äquivalent NCO im Polyisocyanat, vorzugsweise 0,1 bis 8 Äquivalent-%, besonders bevorzugt 0,2 bis 5 Äquivalent-%e, eingesetzt. Die Polyadduktumhüllung kann zwar auch mit noch höheren Anteilen, z. B. 30 Äquivalent-% $NH_2$ pro NCO, durchgeführt werden, doch werden durch solch hohe Umsetzungen die Anteile der reaktiven Isocyanatgruppen bei der Verwendung der stabilisierten Isocyanate in Polyurethan-Einkomponenten-Reaktivsystemen zu stark vermindert und impraktikabel.

Als $NH_2$-Äquivalent gilt bei Hydrazin jeweils eine $—NH_2$-Gruppe (bzw. eine —NH-Alkylgruppe bei Alkylhydrazinderivaten), bei « Hydrazid »-Verbindungen gilt eine $—CO \cdot NH \cdot NH_2$-Gruppe als ein $NH_2$-Äquivalent.

Als Temperatur der Umhüllungsreaktionen werden Temperaturen unter den jeweiligen Schmelztemperaturen des Polyisocyanats gewählt. Sie liegen im allgemeinen unter 70 °C, bevorzugt bei 0 bis 50 °C.

Die Stabilisierung des bei Raumtemperatur festen Isocyanats gegenüber H-aktiven Verbindungen erfolgt in der Regel innerhalb weniger Minuten, so daß auch eine kontinuierliche Arbeitsweise bei der Herstellung der Einkomponentensysteme gewährleistet wird.

Die « Stabilisierung » der festen Polyisocyanate durch Polyaddukt-Umhüllung wird in einem flüssigen Medium, das kein (gutes) Lösungsmittel für die festen Polyisocyanate darstellt, durchgeführt.

Das flüssige Medium kann aus niedermolekularen oder bevorzugt höhermolekularen Mono- oder bevorzugt Polyolen mit OH-Zahlen von 15 bis 150, vorzugsweise 20 bis 120, bestehen. Vorzugsweise werden solche höhermolekularen Polyole als flüssiges Medium eingesetzt, welche gleichzeitig als höhermolekulare Polyole in der erfindungsgemäßen Plastisolhaftmittelmischung eingesetzt werden. Dies sind vorzugsweise höhermolekulare Polyesterpolyole mit leichter Verzweigung, wie sie bereits genannt wurden.

Die in Frage kommenden, weiteren höhermolekularen Polyhydroxylverbindungen, soweit sie mit den PVC-Plastisolen verträglich sind, sind z. B. Polyether der an sich bekannten Art, wie sie z. B. durch Polymerisation von Tetrahydrofuran oder von Epoxiden wie Butylenoxid, Epichlorhydrin, Styroloxid und/oder Propylenoxid und Ethylenoxid durch Anlagerung als Startkomponenten mit reaktionsfähigen Wasserstoffatomen, wie Wasser, mehrwertige Alkohole, Ammoniak oder mehrwertige Amine oder Zucker hergestellt werden.

Als flüssiges Medium bei der Stabilisierungsreaktion können auch Weichmacher oder weichmacherartige Verbindungen verwendet oder mitverwendet werden, z. B. Phthalate, wie Dioctyl-, Diisododecyl-, Dibenzyl-, Butylbenzylphthalat oder auch Phosphate wie Trioctylphosphat ferner die weichmachenden Verbindungen, wie sie bereits als Weichmacher für die Plastisolmischungen bereits beschrieben worden sind.

Auch Kohlenwasserstoffe, wie sogenannte Butadienöle oder Polyether mit höherem Molekulargewicht gegebenenfalls ohne Hydroxylendgruppen, können als Reaktionsmedium verwendet werden. Auch hier wird so verfahren, daß das feinpulverisierte, feste Isocyanat zu einer Lösung des Stabilisators im Weichmacher möglichst bei Raumtemperatur eingerührt wird.

Die auf diese Weise stabilisierte Polyisocyanat/Weichmacher-Suspension kann anschließend für die Herstellung der bei Raumtemperatur lagerstabilen PVC/Polyisocyanat-Abmischung verwendet werden.

Die stabilisierten Polyisocyanate werden besonders bevorzugt in Suspension mit festen Polyisocyanaten in den Weichmachern oder in einer Lösung der höhermolekularen, leichtverzweigten Polyesterpolyolen in einem geeigneten Weichmacher, hergestellt und liegen somit in einer direkt weiter verwendbaren Suspensionsform für die PVC-Abmischungen vor.

Die stabilisierten Polyisocyanate besitzen in den Weichmachern alleine, insbesondere aber auch in den Polyolen oder Polyol-Weichmacherabmischungen eine außerordentlich gute Lagerstabilität, auch bei erhöhten Temperaturen, selbst in Gegenwart hochwirksamer Polyurethankatalysatoren, PVC-Stabilisatoren oder Wasser.

Auch die Abmischung dieser Suspension mit den geeigneten PVC-Komponenten (PVC-Plastisolen), ist ausgezeichnet lagerstabil. Bei Verwendung von festen Polyolen, z. B. höherschmelzenden Polyestern, ist es von Vorteil, diese Polyole in einem geeigneten Weichmacher zu lösen und dieser Lösung anschließend den gewünschten Stabilisator zuzusetzen. Nach Zugabe der Polyisocyanate in Form von reinen Pulvern erfolgt die in situ-Stabilisierung der Polyisocyanate in Gegenwart der H-aktiven Polyolkomponente.

Erst oberhalb einer bestimmten Temperatur, die in den PVC-Plastisolmischungen oberhalb etwa 100, für die Beschichtung mit PVC-Plastisolmischungen üblicherweise bei 130 bis 210°, gewählt ist, weil hier einerseits die Gelierung des PVCs erfolgt und zum anderen die Reaktion der Polyisocyanate mit den reaktionsfähigen Gruppen des Kunststoffs oder textilen Substrat und gegebenenfalls den höhermolekularen Hydroxylverbindungen erfolgt, tritt die PU-bildende Reaktion ein.

Durch einfache Variation der Reaktionsbedingungen, z. B. Temperatur bei der Umhüllungsreaktion der Isocyanate, Auswahl des Reaktionsmediums oder Art und Menge der zur Stabilisierung herangezogenen Stabilisatoren läßt sich diese Vernetzungstemperatur variieren und eine hohe Lagerstabilität auch bei höheren Lagertemperaturen der Plastisolmischungen einstellen.

Es war überraschend, daß insbesondere mit Amidinen und/oder Guanidinen als Stabilisatoren umhüllte Polyisocyanate in der PVC-Mischung eine sehr wirksame Substrathaftung ergeben, welche möglicherweise durch den bei den hohen Temperaturen ausgelösten katalytischen Einfluß der Amidine auf die Isocyanatreaktionen besteht, ohne daß jedoch eine Verfärbung oder ein Abbau des PVCs erfolgt.

Die Menge an stabilisierten Polyisocyanaten innerhalb der erfindungsgemäßen PVC-Plastisolmischung liegt im allgemeinen zwischen 0,1 und 10 Gew.-%, bezogen auf PVC-Plastisolmischung, vorzugsweise bei 0,3 bis 6 Gew.-% und beträgt in den meisten Fällen und somit besonders bevorzugt 0,5 bis 3 Gew.-%.

Bei Mitverwendung von leicht verzweigten, höhermolekularen Polyhydroxylverbindungen werden üblicherweise solche Mengen eingesetzt, daß das NCO/OH-Verhältnis zwischen 1,5 : 1 bis 0,8 : 1, bevorzugt 1,2 : 1 bis 1 : 1 beträgt.

Der Einsatz von Weichmachern wird dadurch in der Menge bestimmt, daß ein pastöses, streichfähiges Plastisol entsteht, wie dies in der PVC-Technik wohlbekannt ist. Man verwendet im allgemeinen pro 100 Gewichtsteile PVC-(Co-)Polymer 43-185 Gewichtsteile Weichmacher und 2-30 Gewichtsteile leicht verzweigte Polyhydroxylverbindungen.

Die erfindungsgemäßen, stabilisierten Polyisocyanate, Weichmacher und/oder leicht verzweigte höhermolekulare Polyhydroxylverbindungen enthaltenden PVC-Plastisole werden als Haftgrundstrich für Beschichtungen auf Basis von weichgemachtem PVC, insbesondere zur Herstellung von Planen, Traglufthallen und anderen Flächengebilden für textiles Bauen, Zeltdächern, Markisen, flexiblen Behältern, Schutzbekleidungen, Förderbändern, Flockteppichen oder Schaumkunstleder verwendet. Besonders gut geeignet sind die erfindungsgemäßen Plastisolmischungen als Haftgrundstrich auf Substraten mit gegenüber Isocyanaten reaktionsfähigen Gruppen, insbesondere bei der Beschichtung von Kunststoffen, textilen Flächengebilden oder Filamenten auf Basis von Chemiefasern, z. B. Polyamiden, Polyestern, aber auch Zellulose und anderen natürlichen Fasern. Die nachfolgenden Beispiele dienen zur weiteren Erläuterung der Erfindung. Alle Prozentangaben beziehen sich auf Gewichtsprozente. Es wurden folgende Abkürzungen verwendet:

Die Beschichtungen können nach allen üblichen, dem Fachmann geläufigen Techniken aufgetragen werden. Zum Beispiel können die erfindungsgemäßen PVC-Plastisole auf die Substrate gedruckt, gerakelt, gerastert oder gesprüht oder durch Tauchen aufgebracht werden. Je nach herzustellendem Artikel werden auf die so vorbehandelten Substratoberflächen nur eine oder auch mehrere haftvermittlerfreie PVC-Schichten, z. B. als Plastisol oder durch Extrusions- oder Schmelzwalzenbeschichtung oder auch durch Laminierung aufgebracht.

Die Herstellung der fertigen Schichten, also die Reaktion der NCO-Gruppen des Haftvermittlers mit dem Substrat und die Gelierung der PVC-Schicht erfolgt, unabhängig von der Art des Auftrags, nach der üblichen Weise bei höheren Temperaturen, wobei je nach Zusammensetzung der PVC-Schichten Temperaturen zwischen 130 und 210° besonders üblich sind. Die PVC-Plastisol-Mischungen entsprechend der Erfindung können auch als Haftgrund für die Beflockung benutzt werden, wobei man bevorzugt Temperaturen wählt, bei denen während der Ausheizreaktion keine Beeinträchtigung der Flockfasereigenschaften erfolgt.

## Beispiele

### Beispiel 1

(Vergleichsversuch, Beurteilung der Reaktivität von Polyisocyanaten gegenüber H-aktiven Verbindungen)

a) Unstabilisiertes Polyisocyanat, suspendiert in Weichmacher

56 g eines monomerfreien, trimerisierten, 2,4-Diisocyanatotoluols (Polyisocyanurat mit einem NCO-Gehalt von 15,5 %) werden in Form eines feingemahlenen Pulvers (mittlere Korngröße ca. 10 μm) in 100 g Dioctylphthalat (Weichmacher) suspendiert.

b) Reaktivitätstest der Suspension (genenüber aromatischem Diamin)

Um die Reaktivität des in heterogener Phase vorliegenden Polyisocyanats gegenüber H-aktiven Verbindungen zu prüfen, werden 17 g eines aromatischen Diamins (2,4/2,6-Diamino-3,5-diethyltoluol; 65/35 Molverhältnis der Isomeren) der Suspension zugesetzt. Die Polyaddition ist bereits nach wenigen Minuten beendet und man erhält unter exothermer Reaktion eine bröckelige, feste Masse des Polyharnstoffs in Dioctylphthalat. Diese Abmischung erweist sich somit als nicht lagerstabil.

### Beispiel 2

a) Oberflächenstabilisiertes Polyisocyanat in Weichmacher

Werden der in Beispiel 1a) genannten Suspension des Polyisocyanates in Dioctylphthalat 0,4 g 4,4'-Diamino-3,3'-dimethyl-dicyclohexyl-methan zugesetzt, so bleibt die mittelviskose Suspension bei Raumtemperatur unverändert.

b) Reaktivitätstest der Suspension

Selbst nach Zusatz von 17 g 2,4/2,6-Diamino-3,5-diethyltoluol ist die Suspension auch bei mäßig erhöhten Temperaturen (40-60 °C) unbegrenzt lagerstabil (Prüfzeit bisher mehrere Monate). Eine Aufdickung (Polyaddition) der für den Beständigkeitstest Diamine enthaltenden Testmischung erfolgt erst bei Temperaturen von mehr als 100 °C.

Beispiel 3

a) Oberflächenstabilisiertes Polyisocyanat, suspendiert in Weichmacher

Das in Beispiel 2 genannte aliphatische Diamin wird durch 0,2 g Ethylendiamin als Stabilisatoramin ersetzt.

b) Reaktivitätstest

Bei Zusatz des aromatischen Diamins erhält man ebenfalls eine bei Raumtemperatur lagerstabile Suspension, die erst oberhalb 100 °C reagiert.

Beispiel 4

a) Oberflächenstabilisiertes Polyisocyanat, suspendiert in Weichmacher

Bei Ersatz der in Beispiel 3 angegebenen 0,2 g Ethylendiamin durch 0,7 g 1,2-Bis-(2-methyltetrahydropyrimidinoyl-1)-ethan erhält man eine bei Raumtemperatur lagerstabile Suspension.

b) Reaktivitätstest

Auch nach Zugabe von 17 g des 2,4/2,6-Diamino-3,5-dithyltoluols erhält man eine bei Raumtemperatur lagerstabile Suspension, die erst oberhalb 100 °C aushärtet.

Beispiel 5 (erfindungsgemäß)

a) Herstellung des PVC-Plastisols

1 000 g PVC/Pastentyp : K-Wert 74 (DIN 53 726) werden mit 700 g Dioctylphthalat und 12 g Barium-Cadmium-Laurat über einen Dreiwalzenstuhl homogen vermischt.

b) Herstellung der Haftmittel/PVC-Mischung

Zu 100 g dieses PVC-Plastisols 5a) werden jeweils 5,6 g der in Beispielen 1a) bis 4a) angegebenen Suspensionen der Polyisocyanate in Dioctylphthalat zugesetzt.

Während das PVC-Plastisol/Haftmittel-Gemisch gemäß Beispiel 1a) (mit unstabilisiertem Polyisocyanat) nach 24 Stunden stark eingedickt ist, so daß es nicht mehr verarbeitet werden kann (Vergleichsversuch), zeigen die Plastisol/Haftmittel-Gemische gemäß Beispielen 2a) bis 4a) (unter Verwendung der erfindungsgemäß einzusetzenden, oberflächenmodifizierten, stabilisierten Polyisocyanate) selbst nach 30 Tagen Standzeit praktisch keine Veränderung der Viskosität. In allen Fällen sind und bleiben diese Plastisole gut streichfähig.

Die Polyisocyanat-haltigen PVC-Plastisole aus Beispiel 1 bis 4 werden auf einem Testgewebe aus Polyamid 66 (940 dtex., Bindung L1/1, Einstellung : 9,0/9,5 Fd/cm) mit einem Rakelmesser und einem Auflagegewicht von 100 g/m$^2$ aufgetragen und bei 140 °C in einem mit Heißluft beheizten Umluftofen geliert und hitzegehärtet. Auf diesem Grundstrich wird eine Deckschicht aus haftmittelfreiem PVC-Plastisol in einer Menge von 250 g/m$^2$ aufgebracht und der Verbund bei 180 °C im Umluftofen ausgeheizt. Die Haftfestigkeit wird an 5 cm breiten Probekörpern, die aus der Beschichtung ausgestanzt wurden, gemessen (DIN 53 357). Die erhaltenen Haftfestigkeitswerte liegen in allen vier Fällen bei 185 N/5 cm. Während die Plastisolmischung nach Beispiel 1 (Vergleichsversuch mit unstabilisiertem Polyisocyanat) jedoch sehr schnell ihre Fließfähigkeit beim Aufrakeln verliert, sind die erfindungsgemäßen Plastisolmischungen (enthaltend 2a) bis 4a)) über lange Zeit streichstabil und ergeben auch nach einer Standzeit von 30 Tagen und nochmaligem Beschichten praktisch gleiche Beschichtungseigenschaften und gleiche Haftfestigkeit.

Beispiel 6 (Vergleichsbeispiel)

A. Zu einer Lösung von 100 g eines leicht verzweigten Polyesters aus 4 Mol Adipinsäure, 4 Mol Hexandiol-1,6 und 1 Mol Trimethylolpropan (OH-Zahl 143) in 100 g Benzyl-butylphthalat (als Weichmacher) werden 72 g dimeres 2,4-Diisocyanatotoluol in Form eines feingemahlenen Pulvers (mittleres Korn 15 μm) eingerührt. Diese Suspension des unstabilisierten Polyisocyanats ist bei Raumtemperatur nicht lagerstabil. Es erfolgt nach einigen Stunden Eindickung der Suspension zu einem festen, nicht mehr gießfähigen Produkt.

B. Um die Lagerstabilität der in Beispiel 6A angeführten Haftvermittlerkomponente in PVC-Plastisol zu beurteilen, wurden 100 g PVC-Plastisol nach folgender Zusammensetzung :

300 g PVC/Pastentyp : K-Wert 70 nach DIN 53 726

300 g PVC/Pastentyp : K-Wert 80 nach DIN 53 726

400 g $C_{10}$-$C_{18}$-Alkansulfonsäurephenylester

60 g Kaolin

20 g dibasisches Bleiphosphit und
10 g Chromtrioxid/Grün
mit 5,5 g des leicht verzweigten Polyesters (s. Beispiel 6A) homogen vermischt.

In diese PVC-Abmischung 6B) erfolgt die Zugabe von 2 g dimerem 2,4-Diisocyanatotoluol. Nach 10 bis 15 Stunden ist die Viskosität der PVC-Plastisolmischung so stark angestiegen, daß sie nicht mehr verarbeitbar ist.

Beispiel 7

Zu jeweils 272 g der in Beispiel 6A genannten Suspension aus Polyester/Benzyl-butylphthalat und dimerem 2,4-Diisocyanatotoluol werden folgende Stabilisatoren in der angegebenen Konzentration zugesetzt :

a) 1,5 g Piperazin,
b) 1,5 g Piperazin und
1,0 g 1,2-Dimethyl-tetrahydropyrimidin
c) 2,0 g 1,5,7-Triaza-N-cyclohexyl-bicyclo-[4,4,0]-dec-5-en.

Alle drei Suspensionen verhalten sich bei Raumtemperatur lagerstabil. Es erfolgt auch nach monatelanger Lagerung der haftmittelhaltigen PVC-Plastisole keine Aufdickung.

Beispiel 8

Zu 100 g eines flüssigen, leicht verzweigten Polyesters aus 4 Mol Adipinsäure, 2 Mol Hexandiol-1,6, 2 Mol Propandiol-1,2 und 0,91 Mol Trimethylolpropan (OH-Zahl 106) werden 31,4 g dimeres 2,4-Diisocyanatotoluol zugesetzt. Darauf erfolgt die Zugabe von 1,0 g 4,4′-Diamino-3,3′-dimethyl-dicyclohexylmethan. Diese Mischung verändert sich bei Raumtemperatur nicht. Ihre Viskosität bleibt unbegrenzt lagerstabil.

Beispiel 9

80 g eines leicht verzweigten Polyesters aus 2 Mol Adipinsäure, 2 Mol Azelainsäure, 2 Mol Hexandiol-1,6, 2 Mol Propandiol-1,2 und 0,9 Mol Trimethylolpropan werden mit 20 g Alkyl ($C_{10}$ bis $C_{18}$)-sulfonsäurephenylester (Mesamoll® BAYER AG) vermischt und dieser Lösung 1,5 g 4,4′-Diaminodicyclohexylmethan zugesetzt. Danach wurden 28 g dimeres 2,4-Diisocyanatotoluol der Reaktionsmischung unter Rühren zugeführt. Diese Suspension verhält sich ebenfalls bei Raumtemperatur über lange Zeiten lagerstabil.

Beispiel 10

Zu jeweils 100 g PVC-Plastisol aus Beispiel 6B wurden jeweils 7,5 g der Polyisocyanat-Zubereitung gemäß Beispielen 7a, 7b und 7c zugesetzt. Die Viskosität dieser Plastisolmischungen der erfindungsgemäßen Art hat sich nach 30-tägiger Lagerung bei Raumtemperatur praktisch nicht verändert. Die Plastisole sind noch gut gießfähig und lassen sich einwandfrei verarbeiten. Die Haftfestigkeit von Beschichtungen mit diesen Plastisolen auf Polyamid 66-Gewebe (940 dtex) und Polyester-Geweben (1 100 dtex) ist wie folgt :

| PVC-Plastisol gemäß | Haftfestigkeit (N/5 cm) | |
|---|---|---|
| | Polyamid 940 dtex | Polyester 1100 dtex |
| Beispiel 7a | 145 | 125 |
| Beispiel 7b | 185 | 115 |
| Beispiel 7c | 150 | 120 |

Überraschenderweise wird die Haftfestigkeit der PVC-Plastisole gemäß Beispiel 7 in Folge der katalytischen Wirkung des 1,2-Dimethyl-tetrahydropyrimidins auf die Reaktion des Polyisocyanates mit den H-aktiven Gruppen des Polyamidsubstrates deutlich verbessert.

Beispiel 11

100 g PVC-Plastisol-Abmischung aus Beispiel 6B werden mit 10,5 g Polyisocyanat-Zubereitung aus Beispiel 8 vermischt. Nach 30-tägiger Lagerung bei Raumtemperatur zeigt sich praktisch keine Veränderung im Viskositätsverhalten. Die erzielte Haftfestigkeit auf Polyamid 6-Geweben beträgt 155 N/5 cm und auf Polyester 125 N/5 cm.

**Patentansprüche**

1. Haftungsvermittelnde Zusätze enthaltende PVC-Plastisolgemische für Beschichtungszwecke, auf Basis von
A) PVC-Plastisolen auf Vinylharz-Basis und
B) a) Polyisocyanaten
b) Weichmachern und/oder leicht verzweigten, höhermolekularen, PVC-Plastisol-verträglichen Polyhydroxylverbindungen mit Schmelzpunkten unter 60 °C,
dadurch gekennzeichnet, daß die lagerstabilen, jedoch bei Temperaturen zwischen 100 bis 200 °C hitzehärtbaren PVC-Plastisol/Polyisocyanat-Gemische als Ba) oberflächenmodifizierte, feinteilige, stabilisierte Polyisocyanate mit retardierter Reaktivität, bei denen 0,1 bis 25 Äquivalent-% der NCO-Gruppen von festen, feinteiligen Di- und/oder Polyisocyanaten mit Schmelzpunkten über 40 °C mit reaktiven mono- und/oder polyfunktionellen Verbindungen umgesetzt sind, neben Weichmachern und/oder leicht verzweigten, höhermolekularen, PVC-Plastisol-verträglichen Polyhydroxylverbindungen als Bb) enthalten, wobei das Gewichtsverhältnis von Vinylharz zu Weichmacher von 80/20 bis 20/80 variiert.

2. Haftungsvermittelnde Zusätze enthaltende PVC-Plastisol-Gemische nach Anspruch 1, dadurch gekennzeichnet, daß die PVC-Plastisol/Polyisocyanat-Gemische als Ba) oberflächenmodifizierte Polyisocyanate eingesetzt werden, bei denen 0,1 bis 25 Äquivalent-% der NCO-Gruppen der festen, feinteiligen Polyisocyanate mit aliphatischen Polyaminen, Hydrazinen, Alkylhydrazinen, N,N'-Dialkylhydrazinen, Polyhydrazidverbindungen und/oder Amidin- und/oder Guanidinverbindungen umgesetzt sind.

3. Haftungsvermittelnde Zusätze enthaltende PVC-Plastisole nach Ansprüchen 1 und 2, dadurch gekennzeichnet, daß als feste, feinteilige Polyisocyanate solche mit Schmelzpunkten oberhalb 80 °C, insbesondere 3,3'-Diisocyanato-4,4'-(oder 2,2'-)-dimethyl-N,N'-diphenylharnstoff, dimeres 2,4-Diisocyanatotoluol, dimeres 4,4'-Diisocyanatodiphenylmethan und 3,3'-Dimethyl-4,4'-diisocyanatodiphenylmethan, sowie die Isocyanurate (Trimere) auf Basis von 2,4-Diisocyanatotoluol, 4,4'-Diisocyanatodiphenylmethan und Isophorondiisocyanat eingesetzt werden.

4. Haftungsvermittelnde Zusätze enthaltende PVC-Plastisole nach Ansprüchen 1 bis 3, dadurch gekennzeichnet, daß die oberflächenmodifizierten Polyisocyanate Ba) direkt in Suspension in Weichmachern und/oder Polyhydroxylverbindungen Bb) mit den « Stabilisatoren » umgesetzt sind und in dieser Form mit den PVC-Plastisolen vermischt werden.

5. Haftungsvermittelnde Zusätze enthaltende PVC-Plastisole nach Ansprüchen 1 bis 4, dadurch gekennzeichnet, daß die PVC-Plastisol/Polyisocyanat-Gemische 0,1 bis 10 Gew.-%, vorzugsweise 0,3 bis 6 Gew.-%, an oberflächenmodifizierten Polyisocyanaten Ba) im Gemisch enthalten.

6. Haftungsvermittelnde Zusätze enthaltende PVC-Plastisole nach Ansprüchen 1 bis 5, dadurch gekennzeichnet, daß die oberflächenmodifizierten Polyisocyanate Ba) und die leicht verzweigten, höhermolekularen Polyhydroxylverbindungen Bb) in solchen Mengen enthalten sind, daß das NCO/OH-Verhältnis zwischen 1,5 : 1 bis 0,8 : 1 beträgt.

7. Haftungsvermittelnde Zusätze enthaltende PVC-Plastisole nach Ansprüchen 1 bis 6, dadurch gekennzeichnet, daß die PVC-Plastisol/Polyisocyanat-Gemische als Bb) leicht verzweigte Polyhydroxylverbindungen mit einer Funktionalität von 2,1 bis 4 und OH-Zahlen von 15 bis 150 enthalten.

8. Haftungsvermittelnde Zusätze enthaltende PVC-Plastisole nach Ansprüchen 1 bis 7, dadurch gekennzeichnet, daß die PVC-Plastisol/Polyisocyanat-Gemische als Bb) hydroxylgruppenhaltige Polyester mit einer Funktionalität von 2,1 bis 4, OH-Zahlen von 20 bis 120, im wesentlichen auf der Basis von aliphatischen Di- oder Tricarbonsäuren mit wenigstens 6 C-Atomen und Diolen mit mindestens 3 C-Atomen, Lactonen und Polycarbonaten auf der Basis von Hexandiol-1,6 enthalten.

9. Verwendung der lagerstabilen, jedoch hitzehärtbaren Plastisol/Haftmittel-Gemische als haftvermittelnde Zusätze die oberflächenmodifizierten, stabilisierten Polyisocyanate Ba) und Weichmacher und/oder leicht verzweigte, höhermolekulare, PVC-Plastisol-verträgliche Polyhydroxylverbindungen Bb), vorzugsweise Polyesterpolyole mit einer Funktionalität ≥ 2,1 und Schmelzpunkten unter 60 °C, nach Ansprüchen 1 bis 8 enthalten, für Haftgrundstriche bei PVC-Beschichtungen auf Kunststoffen, Folien, textilen Flächengebilden oder Filamenten sowie als Haftgrund für Beflockung.

**Claims**

1. PVC plastisol mixtures containing adhesifying additives for coating purposes, based on
A) PVC plastisols on a basis of vinyl resin and
B) a) polyisocyanates and
b) plasticizers and/or slightly branched, relatively high molecular weight polyhydroxyl compounds with melting points below 60 °C which are compatible with PVC plastisols,
characterised in that the PVC-plastisol/polyisocyanate mixtures which are stable in storage but heat curable at temperatures from 100 to 200 °C contain, as component Ba), surface modified, finely divided stabilized polyisocyanates with retarded reactivity in which from 0.1 to 25 equivalents per cent of the isocyanate groups of solid, finely divided diisocyanates and/or polyisocyanates with melting points above 40 °C have been reacted with reactive mono- and/or polyfunctional compounds, in addition to

containing, as component Bb), plasticizers and/or slightly branched, relatively high molecular weight polyhydroxyl compounds which are compatible with PVC plastisols,
the ratio by weight of vinyl resin to plasticizer varying from 80/20 to 20/80.

2. PVC plastisol mixtures containing adhesifying additives according to claim 1, characterised in that the PVC plastisol/polyisocyanate mixtures contain, as component Ba), surface modified polyisocyanates in which from 0.1 to 25 equivalents per cent of the isocyanate groups of the solid, finely divided polyisocyanates have been reacted with aliphatic polyamines, hydrazines, alkylhydrazines, N,N'-dialkylhydrazines, polyhydrazide compounds and/or amidine and/or guanidine compounds.

3. PVC plastisols containing adhesifying additives according to claims 1 and 2, characterised in that the solid, finely divided polyisocyanates used have melting points above 80 °C, in particular 3,3'-diisocyanato-4,4'-(or 2,2'-)dimethyl-N,N'-diphenylurea, dimeric 2,4-diisocyanatotoluene, dimeric 4,4'-diisocyanatodiphenylmethane and 3,3'-dimethyl-4,4'-diisocyanatodiphenylmethane as well as isocyanurates (trimers) based on 2,4-diisocyanatotoluene, 4,4'-diisocyanatodiphenylmethane and isophorone diisocyanate.

4. PVC plastisols containing adhesifying additives according to claims 1 to 3, characterised in that the surface modified polyisocyanates Ba) are directly reacted with the « stabilizers » in suspension in plasticizers and/or polyhydroxyl compounds Bb) and are mixed in this form with the PVC plastisols.

5. PVC plastisols containing adhesifying additives according to claims 1 to 4, characterised in that the PVC plastisol/polyisocyanate mixtures contain from 0.1 to 10 % by weight, preferably from 0.3 to 6 % by weight of surface modified polyisocyanates Ba).

6. PVC plastisols containing adhesifying additives according to claims 1 to 5, characterised in that the surface modified polyisocyanates Ba) and the slightly branched, relatively high molecular weight polyhydroxyl compounds Bb) are contained therein in such quantities that the ratio of NCO/OH is in the range of from 1.5 : 1 to 0.8 : 1.

7. PVC plastisols containing adhesifying additives according to claims 1 to 6, characterised in that the PVC plastisol/polyisocyanate mixtures contain, as component Bb), slightly branched polyhydroxyl compounds having a functionality of from 2.1 to 4 and OH numbers of from 15 to 150.

8. PVC plastisols containing adhesifying additives according to claims 1 to 7, characterised in that the PVC plastisol/polyisocyanate mixtures contain, as component Bb), hydroxyl group-containing polyesters, having a functionality of from 2.1 to 4 and OH numbers of from 20 to 120 and substantially based on aliphatic di- or tricarboxylic acids with at least 6 carbon atoms and diols with at least 3 carbon atoms, lactones and polycarbonates based on hexane-1,6-diol.

9. Use of the mixtures of plastisol and adhesifying agent which are stable in storage but heat curable as adhesifying additives which contain surface modified, stabilized polyisocyanates Ba) and plasticizers and/or slightly branched, relatively high molecular weight polyhydroxyl compounds Bb) which are compatible with PVC plastisols, preferably polyester polyols having a functionality ⩾ 2.1 and melting points below 60 °C, according to claims 1 to 8, as primer coats for PVC coatings on plastics, foils, textile sheetings or filaments and as primers for flock coating.

**Revendications**

1. Mélanges de plastisols de PVC contenant des additifs conférant l'adhérence pour des applications de revêtements, à base de :

A) des plastisols de PVC eux-mêmes à base de résines vinyliques, et

B) a) des polyisocyanates

b) des plastifiants et/ou des composés polyhydroxylés à haut poids moléculaire légèrement ramifiés, compatibles avec les plastisols de PVC et ayant des points de fusion inférieurs à 60 °C,

caractérisés en ce que les mélanges plastisol de PVC/polyisocyanate, stables à la conservation mais durcissables à la chaleur à des températures de 100 à 200 °C, contiennent en plus des plastifiants et/ou des composés polyhydroxylés à haut poids moléculaire légèrement ramifiés compatibles avec les plastisols de PVC, formant le composant Bb), en tant que composant Ba) des polyisocyanates en fines particules, modifiés en surface, stabilisés, à réactivité retardée, dans lesquels 0,1 à 25 équivalents % des groupes NCO des di- et/ou polyisocyanates solides en fines particules ayant des points de fusion supérieurs à 40 °C, ont réagi avec des composés mono- et/ou polyfonctionnels réactifs,
les proportions relatives en poids entre la résine vinylique et les plastifiants variant de 80/20 à 20/80.

2. Mélanges de plastisols de PVC contenant des additifs conférant l'adhérence selon la revendication 1, caractérisés en ce que les mélanges plastisol de PVC/polyisocyanate contiennent en tant que composant Ba) des polyisocyanates modifiés en surface dans lesquels 0,1 à 25 équivalents % des groupes NCO des polyisocyanates solides en fines particules ont réagi avec des polyamines aliphatiques, des hydrazines, des alkylkydrazines, des N,N'-dialkylhydrazines, des polyhydrazides et/ou des amidines et/ou des guanidines.

3. Plastisols de PVC contenant des additifs conférant l'adhérence selon les revendications 1 et 2, caractérisés en ce que l'on utilise en tant que polyisocyanates solides en fines particules des polyisocyanates à point de fusion supérieur à 80 °C, en particulier la 3,3'-diisocyanato-4,4'-(ou 2,2')-diméthyl-N,N'-diphénylurée, le 2,4-diisocyanatotoluène dimère, le 4,4'-diisocyanatodiphénylméthane dimère et le 3,3'-diméthyl-4,4'-diisocyanatodiphénylméthane, ainsi que les isocyanurates (trimères) à base de 2,4-diisocyanatotoluène, de 4,4'-diisocyanatodiphénylméthane et d'isophorone-diisocyanate.

4. Plastisols de PVC contenant des additifs conférant l'adhérence selon les revendications 1 à 3, caractérisés en ce que les polyisocyanates modifiés en surface Ba) sont mis à réagir avec les « stabilisants » directement en suspension dans les plastifiants et/ou les composés hydroxylés Bb) et mélangés sous cette forme avec les plastisols de PVC.

5. Plastisols de PVC contenant des additifs conférant l'adhérence selon les revendications 1 à 4, caractérisés en ce que les mélanges plastisols de PVC/polyisocyanates contiennent en mélange de 0,1 à 10 % en poids, de préférence de 0,3 à 6 % en poids de polyisocyanates modifiés en surface Ba).

6. Plastisols de PVC contenant des additifs conférant l'adhérence selon les revendications 1 à 5, caractérisés en ce que les polyisocyanates modifiés en surface Ba) et les composés polyhydroxylés à haut poids moléculaire légèrement ramifiés Bb) sont contenus en quantités telles que le rapport NCO/OH va de 1,5 : 1 à 0,8 : 1.

7. Plastisols de PVC contenant des additifs conférant l'adhérence selon les revendications 1 à 6, caractérisés en ce que les mélanges plastisol de PVC/polyisocyanate contiennent en tant que composant Bb) des composés polyhydroxylés légèrement ramifiés ayant une fonctionnalité de 2,1 à 4 et des indices d'OH de 15 à 150.

8. Plastisols de PVC contenant des additifs conférant l'adhérence selon les revendications 1 à 7, caractérisés en ce que le mélange plastisol de PVC/polyisocyanate contient en tant que composant Bb) des polyesters contenant des groupes hydroxy, ayant une fonctionnalité de 2,1 à 4, des indices d'OH de 20 à 120, et qui sont essentiellement à base d'acides di- ou tri-carboxyliques aliphatiques à au moins 6 atomes de carbone et de diols à au moins 3 atomes de carbone, de lactones et de polycarbonates à base de 1,6-hexane-diol.

9. Utilisation des mélanges plastisol/agent d'adhérence contenant en tant qu'additifs conférant l'adhérence les polyisocyanates Ba) modifiés en surface et stabilisés et les plastifiants et/ou composés polyhydroxylés à haut poids moléculaire légèrement ramifiés compatibles avec le plastisol de PVC, Bb), de préférence des polyester-polyols à une fonctionnalité supérieure ou égale à 2,1 et ayant des points de fusion inférieurs à 60 °C, selon les revendications 1 à 8, pour des sous-couches d'adhérence pour des revêtements de PVC sur matières plastiques, feuilles, articles textiles planiformes ou filaments ou en tant que couche d'adhérence pour un flocage.